# EUROPÄISCHE PATENTANMELDUNG

(11) **EP 3 792 512 A1**
(43) Veröffentlichungstag der Anmeldung: **17.03.2021**
(21) Anmeldenummer: 20206473.9
(22) Anmeldetag: 18.07.2018
(51) Int. Cl.: F16C 29/04, A47B 88/493, A47B 88/487

(54) **SCHUBLADENAUSZIEHFÜHRUNG**

(30) Priorität: 30.08.2017 AT 507252017
(62) Teilanmeldung aus: 18749285.5
(71) Anmelder: Julius Blum GmbH, 6973 Höchst (AT)
(72) Erfinder: MEUSBURGER, Marc, 6863 Egg (AT)
(74) Vertreter: Torggler & Hofinger Patentanwälte

(57) **Zusammenfassung**

Schubladenausziehführung (4), umfassend,
- eine erste Führungsschiene (9) und wenigstens eine zweite Führungsschiene (10), welche relativ zueinander verschiebbar gelagert sind,
- wenigstens einen Laufwagen (22) mit lastübertragenden Wälzkörpern (24a, 24b, 25, 26), wobei der wenigstens eine Laufwagen (22) zwischen der ersten Führungsschiene (9) und der wenigstens einen zweiten Führungsschiene (10) verschiebbar gelagert ist, wobei der wenigstens eine Laufwagen (22) zumindest zwei um eine Drehachse drehbar gelagerte Wälzkörper (24a, 24b) aufweist, welche in einer Draufsicht auf eine Ebene (P) normal zu einer Längsrichtung (L) der Führungsschienen (9, 10) seitlich versetzt zueinander angeordnet sind, wobei die zumindest zwei Wälzkörper (24a, 24b) des wenigstens einen Laufwagens (22) jeweils eine zylindrische Form aufweisen und in einer Montagelage der Schubladenausziehführung (4) jeweils um eine horizontal verlaufende Drehachse drehbar gelagert sind,
wobei die Drehachsen der zumindest zwei Wälzkörper (24a, 24b) in einer selben Laufebene (A) angeordnet sind und dass die zumindest zwei Wälzkörper (24a, 24b) jeweils einen gleichen Durchmesser aufweisen.

## Beschreibung

Die vorliegende Erfindung bezieht sich auf eine Schubladenausziehführung, umfassend:
- eine erste Führungsschiene und wenigstens eine zweite Führungsschiene, welche relativ zueinander verschiebbar gelagert sind,
- wenigstens einen Laufwagen mit lastübertragenden Wälzkörpern, wobei der wenigstens eine Laufwagen zwischen der ersten Führungsschiene und der wenigstens einen zweiten Führungsschiene verschiebbar gelagert ist, wobei der wenigstens eine Laufwagen zumindest zwei um eine Drehachse drehbar gelagerte Wälzkörper aufweist, welche in einer Draufsicht auf eine Ebene normal zu einer Längsrichtung der Führungsschienen seitlich versetzt zueinander angeordnet sind, wobei die zumindest zwei Wälzkörper des wenigstens einen Laufwagens jeweils eine zylindrische Form aufweisen und in einer Montagelage der Schubladenausziehführung jeweils um eine horizontal verlaufende Drehachse drehbar gelagert sind.

Bei Schubladenausziehführungen werden zur Lastübertragung der Schublade Laufwagen eingesetzt, welche eine reibungsarme und eine präzise Translation der Führungsschienen zueinander ermöglichen. Diese Laufwagen (oder Laufwagenkäfige) weisen Wälzkörper (beispielsweise in Form von Zylindern, Kugeln oder Kegeln) auf, welche an vorgesehenen Laufstegen der Führungsschienen verfahrbar sind, sodass die Führungsschienen relativ zueinander abstützbar sind.

In der WO 2007/108601 A1 und in der DE 20 2014 009 194 U1 sind nichtgattungsgemäße Schubladenausziehführungen offenbart, wobei die lastübertragenden Wälzkörper als Kugeln ausgebildet sind, welche in einem gemeinsamen Laufwagen gelagert sind. Diese Kugelführungen weisen die Nachteile auf, dass die Nutzungsbreite der Kugeln aufgrund ihrer sphärischen Oberfläche nur zu etwa 70% genützt wird, d.h. etwa 30% der Kugelbreite verschwenden Bauraum und erhöhen das Gewicht. Außerdem ist die Kontaktfläche zu den Schienenprofilen lediglich "punktförmig" ausgebildet, wobei dieser Punktkontakt neben einer geringen Abstützfläche auch zu einer hohen Flächenpressung und damit zu unerwünschten Deformationen der Kugeln führt.

In der GB 2 453 326 A ist eine Ausziehführung für Schubladen offenbart, wobei in einem zwischen der Mittelschiene und der Ausziehschiene angeordneten Laufwagen zwei seitlich zueinander beabstandete Wälzkörper in Form von zylindrischen Rollen angeordnet sind. Die zylindrischen Rollen weisen eine in Montagelage vertikal verlaufende Drehachse auf und sind somit nicht als lastübertragende Wälzkörper ausgebildet.

In der DE 30 26 544 A1 ist eine Schubladenausziehführung mit einer Korpusschiene, einer Mittelschiene und mit einer Ladenschiene gezeigt, wobei zwischen diesen Schienen jeweils verschiebbar angeordnete Laufwagen mit lastübertragenden Wälzkörpern angeordnet sind. Die Bewegungen der beiden Laufwagen sind durch ein Zahnrad miteinander synchronisiert, wobei gemäß Fig. 8 die Wälzkörper der Laufwagen in einer Draufsicht auf eine Ebene normal zu einer Längsrichtung der Schubladenausziehführung seitlich versetzt zueinander angeordnet sind.

Aufgabe der vorliegenden Erfindung ist es, eine Schubladenausziehführung der eingangs erwähnten Gattung mit einer stabilen und kompakten Ausführung des Laufwagens anzugeben.

Dies wird erfindungsgemäß durch die Merkmale des Patentanspruchs 1 gelöst. Weitere Ausführungsbeispiele der Erfindung sind in den abhängigen Ansprüchen angegeben.

Gemäß der Erfindung ist also vorgesehen, dass die Drehachsen der zumindest zwei Wälzkörper in einer selben Laufebene angeordnet sind und dass die zumindest zwei Wälzkörper jeweils einen gleichen Durchmesser aufweisen. Dies stellt angesichts der eingangs erwähnten WO 2007/108601 A1 und DE 20 2014 009 194 U1 auch keine naheliegende Maßnahme dar, weil die dort gezeigten Schubladenausziehführungen samt Laufwagen für den Einsatz mit zylindrischen Rollen mit horizontal verlaufenden Drehachsen erheblich modifiziert werden müssten.

Auf diese Weise werden seitliche Kippmomente, die aufgrund einer Belastung der Schublade auf die Führungsschienen ausgeübt werden, über die zueinander seitlich versetzten Wälzkörper verbessert übertragen und können damit optimal aufgefangen werden.

Ein weiterer Vorteil besteht darin, dass anstelle von breiten Wälzkörpern des Laufwagens zumindest zwei seitlich zueinander beabstandete Wälzkörper verwendet werden können. Dadurch kann die Herstellung des Laufwagens vereinfacht werden, weil der Laufwagen mit standardmäßigen Wälzkörpern, welche nur eine einzige vorgegebene Breite und/oder nur einen einzigen vorgegebenen Durchmesser aufweisen, ausgerüstet werden kann. Auf diese Weise kann, falls zweckmäßig, auf eine Bestückung des Laufwagens mit unterschiedlich breiten und/oder unterschiedlich großen Wälzkörpern verzichtet werden.

Neben einer stabilen und kompakten Bauweise kann dabei die Gefahr von Abplattungen der Wälzkörper reduziert werden, weil die auftretenden Kräfte durch die Anordnung von zumindest zwei seitlich zueinander versetzten Wälzkörpern in einer gemeinsamen Laufebene auf einen größeren Bereich verteilt werden und damit jeder einzelne Wälzkörper lediglich reduzierten Belastungen ausgesetzt ist.

Gemäß einem Ausführungsbeispiel kann vorgesehen sein, dass die zumindest zwei Wälzkörper des Laufwagens in einer entlang einer Längsrichtung der Führungsschienen verlaufenden Richtung voneinander beabstandet sind. Gemäß der Erfindung ist vorgesehen, dass
- die zumindest zwei Wälzkörper jeweils um eine in Montagelage horizontal verlaufende Drehachse drehbar gelagert sind, und
- dass die zumindest zwei Wälzkörper jeweils eine zylindrische Form aufweisen.

Bei einer möglichen Ausführungsform kann vorgesehen sein, dass der Laufwagen zumindest drei oder mehrere Wälzkörper aufweist, welche jeweils um eine Drehachse drehbar gelagert sind, wobei zumindest zwei Drehachsen der zumindest drei oder mehreren Wälzkörper in einer ersten Laufebene und die anderen Drehachsen der drei oder mehreren Wälzkörper in einer von der ersten Laufebene gesonderten Laufebene oder in von der ersten Laufebene gesonderten Laufebenen angeordnet sind.

Weitere Einzelheiten und Vorteile der vorliegenden Erfindung werden anhand der nachfolgenden Figurenbeschreibung erläutert. Dabei zeigt bzw. zeigen:
- Fig. 1: eine perspektivische Darstellung eines Möbels mit Schubladen, welche durch Schubladenausziehführungen relativ zu einem Möbelkorpus verfahrbar gelagert sind,
- Fig. 2: eine Schubladenausziehführung, welche mit einer Schubladenseitenwand zu verbinden ist,
- Fig. 3: die am Möbelkorpus zu befestigende erste Führungsschiene mit zwei voneinander gesonderten Laufwagen in einer perspektivischen Ansicht,
- Fig. 4a, 4b: ein Laufwagen mit einer Verzahnung und ein Käfig des Laufwagens in perspektivischen Darstellungen,
- Fig. 5: ein mögliches Ausführungsbeispiel einer Anordnung der Wälzkörper des Laufwagens in einem Querschnitt.

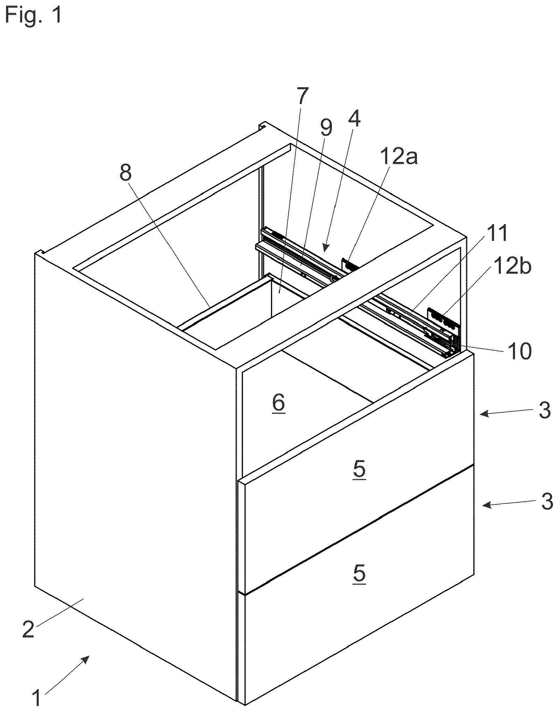

Fig. 1 zeigt ein Möbel 1 mit einem schrankförmigen Möbelkorpus 2, wobei Schubladen 3 über Schubladenausziehführungen 4 relativ zum Möbelkorpus 2 verfahrbar gelagert sind. Die Schubladen 3 weisen eine Frontblende 5, einen Schubladenboden 6, Schubladenseitenwände 7 und eine Rückwand 8 auf. Die Schubladenausziehführungen 4 umfassen jeweils eine erste Führungsschiene 9, welche über Befestigungsabschnitte 12a, 12b am Möbelkorpus 2 zu befestigen ist und zumindest eine zweite Führungsschiene 10, welche relativ zur ersten Führungsschiene 9 verfahrbar gelagert ist. Im gezeigten Ausführungsbeispiel ist noch eine dritte, an der Schublade 3 zu befestigende Führungsschiene 11 vorhanden, wobei die zweite Führungsschiene 10 in der Funktion einer auszugsverlängernden Mittelschiene zwischen der ortsfesten ersten Führungsschiene 9 und der dritten Führungsschiene 11 verschiebbar ist.

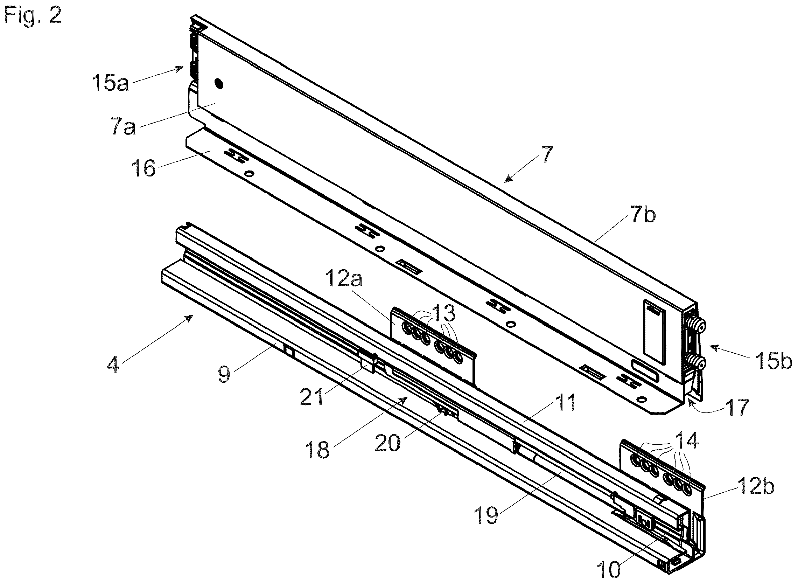

Fig. 2 zeigt eine Anordnung mit einer Schubladenausziehführung 4 und mit einer Schubladenseitenwand 7 in einer perspektivischen Ansicht. Die Befestigungsabschnitte 12a, 12b der ersten Führungsschiene 9 weisen jeweils eine oder mehrere Befestigungsstellen 13, 14 zur Befestigung am Möbelkorpus 2 auf. Die dritte Führungsschiene 11 ist mit der Schubladenseitenwand 7 verbunden oder lösbar verbindbar, wobei die zweite Führungsschiene 10 zwischen der ersten Führungsschiene 9 und der dritten Führungsschiene 11 verfahrbar ist. An der ersten Führungsschiene 9 ist ein Koppelelement 21 angeordnet, welches mit einem Mitnehmer 20 einer an der dritten Führungsschiene 11 gelagerten Einzugsvorrichtung 18 lösbar koppelbar ist, sodass die dritte Führungsschiene 11 gegen Ende der Schließbewegung vom Mitnehmer 20 erfasst und durch einen Kraftspeicher der Einzugsvorrichtung 18 in eine geschlossene Endlage einziehbar ist. Durch eine Dämpfvorrichtung 19, vorzugsweise mit einer hydraulischen Kolben-Zylinder-Einheit, ist diese federunterstützte Einzugsbewegung der dritten Führungsschiene 11 bis hin zur geschlossenen Endlage dämpfbar.

Die Schubladenseitenwand 7 ist als Hohlkammerprofil mit einer inneren Profilwand 7a und einer davon beabstandeten äußeren Profilwand 7b ausgebildet, wobei die Schubladenseitenwand 7 einen nach unten hin offenen und sich in Längsrichtung der Schubladenseitenwand 7 erstreckenden Kanal 17 ausbildet, in welchem die dritte Führungsschiene 11 anordenbar ist. Die Schubladenseitenwand 7 weist ferner eine erste Befestigungsvorrichtung 15a zum Verbinden mit der Rückwand 8, eine zweite Befestigungsvorrichtung 15b zum Verbinden mit der Frontblende 5 sowie eine Auflage 16 zur Abstützung des Schubladenbodens 6 auf.

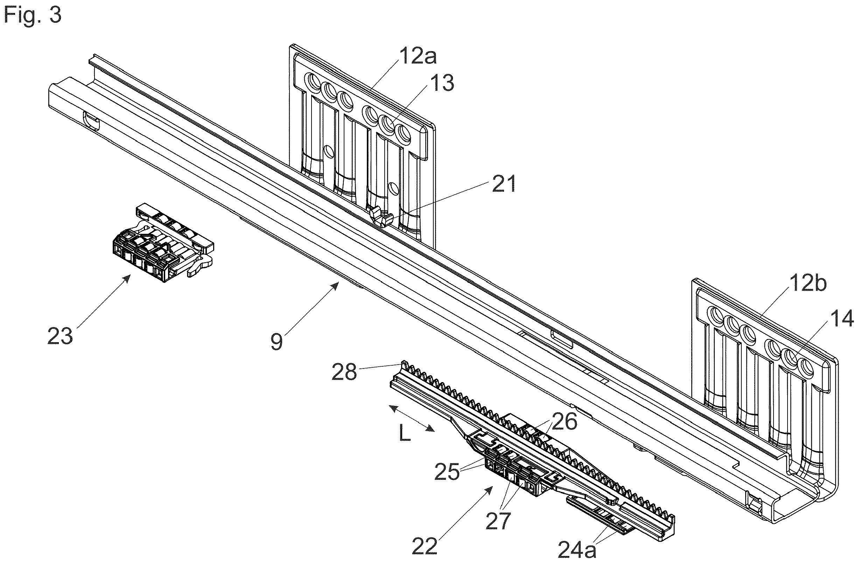

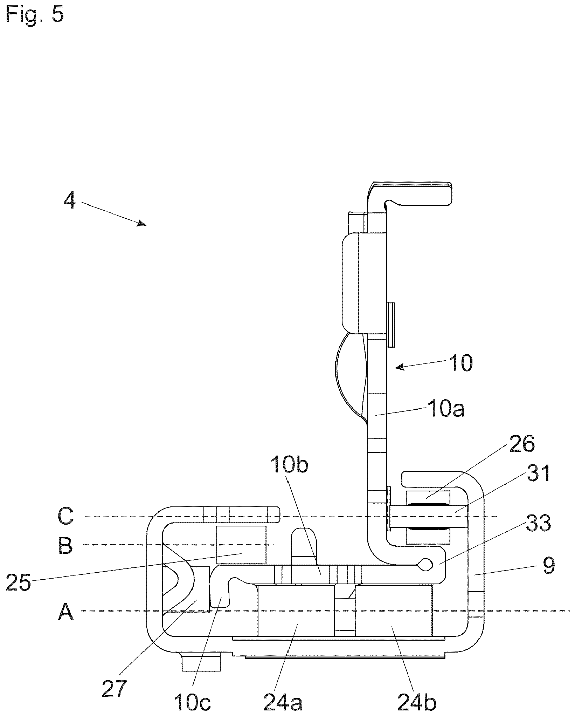

Fig. 3 zeigt die erste Führungsschiene 9 mit den am Möbelkorpus 2 zu montierenden Befestigungsabschnitten 12a, 12b. Die erste Führungsschiene 9 weist im Querschnitt einen U-förmigen oder C-förmigen Abschnitt auf, in welchem ein Laufwagen 22 und ein davon gesonderter weiterer Laufwagen 23 zur Führung und Abstützung der zweiten Führungsschiene 10 verschiebbar gelagert sind. Der Laufwagen 22 und der weitere Laufwagen 23 sind in einer gemeinsamen Laufebene verschiebbar gelagert. Der Laufwagen 22 weist lastübertragende Wälzkörper 24a, 24b, 25, 26 auf, deren Drehachsen in Höhenrichtung voneinander beabstandet sind und damit in voneinander gesonderten Laufebenen A, B, C (Fig. 5a, Fig. 5b) angeordnet sind. Der Laufwagen 22 weist ferner auch seitliche Stützrollen 27 mit in Montagelage vertikal verlaufenden Drehachsen auf, wobei die seitlichen Stützrollen 27 einerseits entlang einem in Längsrichtung (L) verlaufenden Vertikalsteg der ersten Führungsschiene 9 und andererseits an einem vertikal verlaufenden Steg 10c (Fig. 5a, Fig. 5b) der zweiten Führungsschiene 10 verfahrbar sind. Durch eine am Laufwagen 22 angeordnete oder ausgebildete Verzahnung 28 kann eine Bewegung des Laufwagens 22 über ein Zahnrad mit einer Bewegung eines weiteren Laufwagens synchronisiert werden, welcher zwischen der zweiten Führungsschiene 10 und der dritten Führungsschiene 11 verschiebbar gelagert ist.

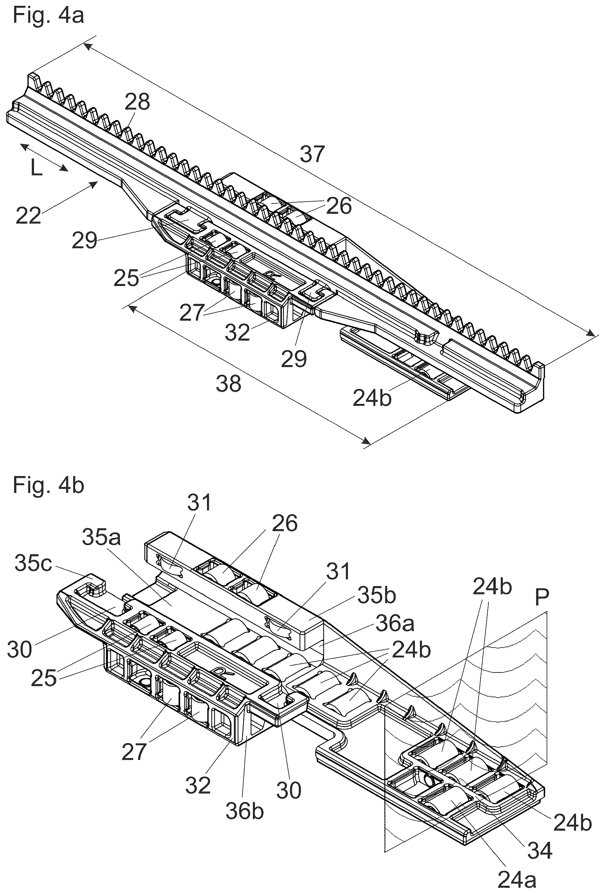

Fig. 4a zeigt den Laufwagen 22 in einer perspektivischen Ansicht. Der Laufwagen 22 umfasst einen Käfig 32, in welchem die lastübertragenden Wälzkörper 24a, 24b, 25, 26 und die seitlichen Stützrollen 27, 31 relativ zum Käfig 32 in einer in Längsrichtung (L) des Laufwagens 22 verlaufenden Richtung ortsfest gelagert sind. Die Verzahnung 28 kann zusammen mit dem Käfig 32 einstückig ausgebildet sein, oder - wie in der Figur gezeigt - am Käfig 32 lösbar befestigt sein. Hierfür weist die Verzahnung 28 in Längsrichtung (L) voneinander beabstandete, vorzugsweise T-förmige und/oder L-förmige, Laschen 29 auf, welche in Montagelage der Verzahnung 28 am Käfig 32 in korrespondierenden Ausnehmungen 30 (Fig. 4b) des Käfigs 32 formschlüssig eingreifen. Die in verschiedenen Laufebenen A, B, C angeordneten Wälzkörper 24a, 24b, 25, 26 sind jeweils um eine horizontal verlaufende Achse drehbar gelagert.

Fig. 4b zeigt den Käfig 32 des Laufwagens 22, wobei die Ausnehmungen 30 zur lösbaren Aufnahme der an der Verzahnung 28 angeordneten Laschen 29 gut erkennbar sind. Die ersten und zweiten Wälzkörper 24a, 24b sind in einer ersten Laufebene (A), die dritten Wälzkörper 25 in einer zweiten Laufebene (B) und die vierten Wälzkörper 26 in einer dritten Laufebene (C) angeordnet, wobei die erste, zweite und dritte Laufebene (A, B, C) in Montagelage der Schubladenausziehführung 4 am Möbelkorpus 2 in Höhenrichtung voneinander beabstandet sind. Die Wälzkörper 24a, 24b, 25 und 26 können in einer entlang einer Längsrichtung (L) verlaufenden Richtung voneinander beabstandet sein. Zumindest die Wälzkörper 24a, 24b, vorzugsweise alle Wälzkörper 24a, 24b, 25, 26, weisen eine zylindrische Form auf. Darüber hinaus ist es möglich, dass die ersten, zweiten und dritten Wälzkörper 24a, 24b, 25 und 26 jeweils einen unterschiedlichen Durchmesser aufweisen. Die Durchmesser der Wälzkörper 24a, 24b können jeweils zwischen 3,8 mm und 4,2 mm, die Durchmesser der Wälzkörper 25 zwischen 2,8 mm und 3,3 mm und die Durchmesser der Wälzkörper 26 zwischen 4,0 mm und 4,5 mm dimensioniert werden. Auch kann vorgesehen sein, dass jene Wälzkörper 24a, 24b der Wälzkörper 24a, 24b, 25 und 26, welche an einem vorderen Ende des Laufwagens 22 gelagert sind, einen geringeren Durchmesser als die anderen Wälzkörper 25, 26 aufweisen. Die zumindest zwei Wälzkörper 24a, 24b des Laufwagens 22 sind, vorzugsweise ausschließlich, durch einen Teil des Käfigs 32, vorzugsweise durch zumindest einen Steg 34 der Käfigs 32, in seitlicher Richtung voneinander beabstandet, wobei sich der Steg 34 zumindest abschnittsweise in Längsrichtung (L) erstreckt. Exemplarisch eingezeichnet ist eine normal zu einer Längsrichtung (L) der Führungsschienen 9, 10 verlaufende Ebene (P), wobei die Wälzkörper 24a, 24b in einer Draufsicht auf diese Ebene (P) seitlich versetzt zueinander angeordnet sind.

Gemäß einem Ausführungsbeispiel kann vorgesehen sein, dass der wenigstens eine Laufwagen 22 drei in der Montagelage im Wesentlichen horizontal ausgerichtete Stege 35a, 35b, 35c aufweist, an welchen jeweils ein Wälzkörper 24b, 25, 26 gelagert ist, wobei vorzugsweise vorgesehen ist, dass die Wälzkörper 24b, 25, 26 durch die Stege 35a, 35b, 35c hindurchgeführt sind. In der gezeigten Figur sind die Stege 35a, 35b, 35c über zwei in der Montagelage im Wesentlichen vertikal ausgerichtete Verbindungsstege 36a, 36b miteinander verbunden, wobei vorzugsweise vorgesehen ist, dass zumindest einer der Verbindungsstege 36a, 36b wenigstens eine seitliche Stützrolle 31 aufweist, welche besonders bevorzugt durch diesen Verbindungssteg 36a, 36b hindurchgeführt ist.

Einer der in Montagelage im Wesentlichen horizontal ausgerichteten Stege 35a, 35b, 34c kann sich im Wesentlichen über die gesamte Breite zumindest einer der Führungsschienen 9, 10 erstrecken, wobei vorzugsweise vorgesehen ist, dass dieser Steg 35a eine tiefste Lage relativ zu den beiden anderen Stegen 35b, 35c einnimmt. Einer der in Montagelage im Wesentlichen horizontal ausgerichteten Stege 35a, 35b, 35c kann im Wesentlichen doppelt so breit als zumindest einer der beiden anderen Stege 35b, 35c ausgebildet sein.

Der wenigstens eine Laufwagen 22 kann in einem Querschnitt im Wesentlichen U-förmig oder im Wesentlichen C-förmig ausgebildet sein.

Wie aus Fig. 4a hervorgeht, kann der wenigstens eine Laufwagen 22 eine Länge 37 aufweisen, wobei sich der Bereich 38, in welchem die Wälzkörper 24a, 24b, 25, 26 des Laufwagens 22 angeordnet sind, nur über einen Teil der Länge 37 des wenigstens einen Laufwagens 22 erstreckt.

Fig. 5a zeigt die erste Führungsschiene 9 und die relativ dazu verschiebbare zweite Führungsschiene 10 in einem Querschnitt, wobei der Käfig 32 des Laufwagens 22 aus Gründen der verbesserten Übersicht ausgeblendet ist. Die zweite Führungsschiene 10 weist einen, vorzugsweise vertikalen, Seitensteg 10a und einen mit dem Seitensteg 10a über einen Falz 33 verbundenen, vorzugsweise horizontalen, Quersteg 10b auf. Die zumindest zwei Wälzkörper 24a, 24b sind in Längsrichtung (L) entlang einem Laufsteg der ersten Führungsschiene 9 verfahrbar, während die dritten Wälzkörper 25 entlang des Quersteges 10b und die vierten Wälzkörper 26 entlang des Falzes 33 der zweiten Führungsschiene 10 abrollbar sind. Im gezeigten Ausführungsbeispiel sind die zumindest zwei Wälzkörper 24a, 24b, zumindest ein dritter Wälzkörper 25 und zumindest ein vierter Wälzkörper 26 jeweils in voneinander gesonderten Laufebenen (A, B, C) verfahrbar gelagert. Zu erkennen ist eine seitliche Stützrolle 31 des Laufwagens 22, welche eine vertikal verlaufende Drehachse aufweist und welche zwischen der ersten Führungsschiene 9 und dem vertikal verlaufenden Seitensteg 10a der zweiten Führungsschiene 10 abrollt. Die Wälzkörper 24a, 24b, 25 und 26 sind jeweils um eine in Montagelage horizontal verlaufende Drehachse drehbar gelagert, wobei die Drehachsen der Wälzkörper 24a, 24b, 25 und 26 jeweils in drei übereinanderliegenden Laufebenen (A, B, C) angeordnet sind. Eine verbesserte Abstützung zur Kompensation von seitlichen Kippmomenten ist dadurch gegeben, wenn die Wälzkörper 24a, 24b, 25, 26 - in einer Draufsicht auf eine normal zur Längsrichtung (L) der Führungsschienen 9, 10 verlaufende Ebene (P) - seitlich versetzt zueinander angeordnet sind. Überdies kann vorgesehen sein, dass die ersten und zweiten Wälzkörper 24a, 24b in einer Draufsicht auf eine Ebene (P) normal zur Längsrichtung (L) der Führungsschienen 9, 10 eine tiefste Lage relativ zu einem dritten Wälzkörper 25 und zu einem vierten Wälzkörper 26 einnehmen, wobei der dritte Wälzkörper 25 und der vierte Wälzkörper 26 vollständig oberhalb der ersten und zweiten Wälzkörper 24a, 24b angeordnet sind. In der Figur ist außerdem gezeigt, dass der dritte und vierte Wälzkörper 25, 26 in einer Draufsicht auf die Ebene (P) normal zur Längsrichtung (L) relativ zueinander nur teilweise übereinander angeordnet sind. Der Quersteg 10b der zweiten Führungsschiene 10 ist mit einem vertikal verlaufenden Steg 10c verbunden, wobei die seitlichen Stützrollen 27 mit vertikaler Drehachse zwischen der ersten Führungsschiene 9 und dem vertikal verlaufenden Steg 10c der zweiten Führungsschiene 10 abrollbar sind.

Bei allen Ausführungsbeispielen kann vorgesehen sein, dass die ersten und zweiten Wälzkörper 24a, 24b zu einer ersten Wälzkörpergruppe, der dritte Wälzkörper 25 zu einer zweiten Wälzkörpergruppe und der vierte Wälzkörper 26 zu einer dritten Wälzkörpergruppe gehört, wobei die erste, zweite und dritte Wälzkörpergruppe jeweils mehrere Wälzkörper 24a, 24b, 25, 26 aufweisen, welche in derselben Laufebene A, B, C angeordnet sind. Ferner kann vorgesehen sein, dass die Wälzkörper 24a, 24b, 25, 26, welche jeweils in derselben Laufebene (A, B, C) gelagert sind, in Längsrichtung (L) des Laufwagens 22 voneinander beabstandet und/oder relativ zueinander seitlich versetzt angeordnet sind.

## Patentansprüche

1. Schubladenausziehführung (4), umfassend,
- eine erste Führungsschiene (9) und wenigstens eine zweite Führungsschiene (10), welche relativ zueinander verschiebbar gelagert sind,
- wenigstens einen Laufwagen (22) mit lastübertragenden Wälzkörpern (24a, 24b, 25, 26), wobei der wenigstens eine Laufwagen (22) zwischen der ersten Führungsschiene (9) und der wenigstens einen zweiten Führungsschiene (10) verschiebbar gelagert ist, wobei der wenigstens eine Laufwagen (22) zumindest zwei um eine Drehachse drehbar gelagerte Wälzkörper (24a, 24b) aufweist, welche in einer Draufsicht auf eine Ebene (P) normal zu einer Längsrichtung (L) der Führungsschienen (9, 10) seitlich versetzt zueinander angeordnet sind, wobei die zumindest zwei Wälzkörper (24a, 24b) des wenigstens einen Laufwagens (22) jeweils eine zylindrische Form aufweisen und in einer Montagelage der Schubladenausziehführung (4) jeweils um eine horizontal verlaufende Drehachse drehbar gelagert sind,
**dadurch gekennzeichnet, dass** die Drehachsen der zumindest zwei Wälzkörper (24a, 24b) in einer selben Laufebene (A) angeordnet sind und dass die zumindest zwei Wälzkörper (24a, 24b) jeweils einen gleichen Durchmesser aufweisen.

2. Schubladenausziehführung nach Anspruch 1, **dadurch gekennzeichnet, dass** der wenigstens eine Laufwagen (22) einen Käfig (32) zur Lagerung der zumindest zwei Wälzkörper (24a, 24b) aufweist, wobei die zumindest zwei Wälzkörper (24a, 24b) durch einen Teil des Käfigs (32), vorzugsweise durch zumindest einen Steg (34) der Käfigs (32), in seitlicher Richtung voneinander beabstandet sind.

3. Schubladenausziehführung nach Anspruch 1 oder 2, **dadurch gekennzeichnet, dass** die zumindest zwei Wälzkörper (24a, 24b) des Laufwagens (22) in einer entlang einer Längsrichtung (L) der Führungsschienen (9, 10) verlaufenden Richtung voneinander beabstandet sind.

4. Schubladenausziehführung nach einem der Ansprüche 1 bis 3, **dadurch gekennzeichnet, dass** die zumindest zwei Wälzkörper (24a, 24b) jeweils in Bezug auf den wenigstens einen Laufwagen (22) in einer Längsrichtung (L) des Laufwagens (22) ortsfest gelagert sind.

5. Schubladenausziehführung nach einem der Ansprüche 1 bis 4, **dadurch gekennzeichnet, dass** der Laufwagen (22) zumindest drei Wälzkörper (24a, 24b, 25) aufweist, welche jeweils um eine Drehachse drehbar gelagert sind, wobei zumindest zwei Drehachsen der zumindest drei Wälzkörper (24a, 24b, 25) in einer selben Laufebene (A) und eine dritte Drehachse der zumindest drei Wälzkörper (24a, 24b, 25) in einer von der Laufebene (A) gesonderten Laufebene (B) angeordnet sind.

6. Schubladenausziehführung nach einem der Ansprüche 1 bis 5, **dadurch gekennzeichnet, dass** der Laufwagen (22) zumindest vier Wälzkörper (24a, 24b 25, 26) aufweist, welche jeweils um eine Drehachse drehbar gelagert sind, wobei zumindest zwei Drehachsen der zumindest vier Wälzkörper (24a, 24b) in einer selben Laufebene (A) und eine dritte Drehachse und eine vierte Drehachse der zumindest vier Wälzkörper (24a, 24b, 25, 26) in von der Laufebene (A) gesonderten Laufebenen (B, C) angeordnet sind.

7. Schubladenausziehführung nach Anspruch 6, **dadurch gekennzeichnet, dass** zumindest zwei der zumindest vier Wälzkörper (24a, 24b, 25, 26) - in einer Draufsicht auf die Ebene normal zur Längsrichtung (L) der Führungsschienen (9, 10) - eine tiefste Lage relativ zu einem dritten Wälzkörper (25) und zu einem vierten Wälzkörper (26) einnehmen, wobei der dritte Wälzkörper (25) und der vierte Wälzkörper (26) vollständig oberhalb der zumindest zwei Wälzkörper (24a, 24b) angeordnet sind.

8. Schubladenausziehführung nach Anspruch 6 oder 7, **dadurch gekennzeichnet, dass** zumindest zwei der zumindest vier Wälzkörper (24a, 24b, 25, 26) - in einer Draufsicht auf die Ebene normal zur Längsrichtung (L) der Führungsschienen (9, 10) - relativ zueinander nur teilweise übereinander angeordnet sind.

9. Schubladenausziehführung nach Anspruch 8, **dadurch gekennzeichnet, dass** zumindest zwei der zumindest vier Wälzkörper (24a, 24b, 25, 26) an einem vorderen Endbereich des Laufwagens (22) gelagert sind, wobei die zumindest zwei Wälzkörper (24a, 24b) einen geringeren Durchmesser als der dritte und der vierte Wälzkörper (25, 26) aufweisen.

10. Schubladenausziehführung nach einem der Ansprüche 6 bis 9, **dadurch gekennzeichnet, dass** zumindest zwei Wälzkörper (24, 24b) der zumindest vier Wälzkörper (24a, 24b, 25, 26) zu einer ersten Wälzkörpergruppe, ein dritter Wälzkörper (25) der zumindest vier Wälzkörper (24a, 24b, 25, 26) zu einer zweiten Wälzkörpergruppe und ein vierter Wälzkörper (26) der zumindest vier Wälzkörper (24a, 24b, 25, 26) zu einer dritten Wälzkörpergruppe gehört, wobei die erste, zweite und dritte Wälzkörpergruppe jeweils mehrere Wälzkörper (24a, 24b, 25, 26) aufweisen, welche in derselben Laufebene (A, B, C) angeordnet sind.

11. Schubladenausziehführung nach einem der Ansprüche 1 bis 10, **dadurch gekennzeichnet, dass** die Schubladenausziehführung (4) eine dritte, an einer Schublade (3) zu befestigende Führungsschiene (11) aufweist, wobei die erste Führungsschiene (9) an einem Möbelkorpus (2) zu befestigen ist und wobei die zweite Führungsschiene (10) zwischen der ersten Führungsschiene (9) und der dritten Führungsschiene (11) verschiebbar gelagert ist.

12. Schubladenausziehführung nach einem der Ansprüche 6 bis 11, **dadurch gekennzeichnet, dass** der wenigstens eine Laufwagen (22) drei in der Montagelage im Wesentlichen horizontal ausgerichtete Stege (35a, 35b, 35c) aufweist, an welchen jeweils ein der zumindest vier Wälzkörper (24b, 25, 26) gelagert ist, wobei vorzugsweise vorgesehen ist, dass die Wälzkörper (24b, 25, 26) durch die Stege (34a, 34b, 34c) hindurchgeführt sind.

13. Schubladenausziehführung nach Anspruch 12, **dadurch gekennzeichnet, dass** die Stege (35a, 35b, 35c) über zwei in der Montagelage im Wesentlichen vertikal ausgerichtete Verbindungsstege (36a, 36b) miteinander verbunden sind, wobei vorzugsweise vorgesehen ist, dass zumindest einer der Verbindungsstege (36a, 36b) wenigstens eine seitliche Stützrolle (31) aufweist, welche besonders bevorzugt durch diesen Verbindungssteg (36a, 36b) hindurchgeführt ist.

14. Schubladenausziehführung nach Anspruch 12 oder 13, **dadurch gekennzeichnet, dass** sich einer der in Montagelage im Wesentlichen horizontal ausgerichteten Stege (35a, 35b, 35c) im Wesentlichen über die gesamte Breite zumindest einer der Führungsschienen (9, 10) erstreckt, wobei vorzugsweise vorgesehen ist, dass dieser Steg (35a) eine tiefste Lage relativ zu den beiden anderen Stegen (35b, 35c) einnimmt.

15. Schubladenausziehführung nach einem der Ansprüche 12 bis 14, **dadurch gekennzeichnet, dass** einer der in Montagelage im Wesentlichen horizontal ausgerichteten Stege (35a, 35b, 35c) im Wesentlichen doppelt so breit als zumindest einer der beiden anderen Stege (35b, 35c) ist.

16. Schubladenausziehführung nach einem der Ansprüche 1 bis 15, **dadurch gekennzeichnet, dass** der wenigstens eine Laufwagen (22) in einem Querschnitt im Wesentlichen U-förmig oder im Wesentlichen C-förmig ausgebildet ist.

17. Schubladenausziehführung nach einem der Ansprüche 1 bis 16, **dadurch gekennzeichnet, dass** der wenigstens eine Laufwagen (22) eine Länge (37) aufweist und sich der Bereich (38), in welchem die Wälzkörper (24a, 24b, 25, 26) des Laufwagens (22) angeordnet sind, nur über einen Teil der Länge (37) des wenigstens einen Laufwagens (22) erstreckt.

18. Schublade (3) mit wenigstens einer Schubladenausziehführung (4) nach einem der Ansprüche 1 bis 17 zum Bewegen einer Schublade (3) relativ zu einem Möbelkorpus (2).
